Europäisches Patentamt

European Patent Office

Office européen des brevets

(11) Veröffentlichungsnummer: **0 355 182**
**A1**

## EUROPÄISCHE PATENTANMELDUNG

(21) Anmeldenummer: 88113460.5

(22) Anmeldetag: 18.08.88

(51) Int. Cl.⁴: **H01G 4/30 , H01G 1/10**

(43) Veröffentlichungstag der Anmeldung:
28.02.90 Patentblatt 90/09

(84) Benannte Vertragsstaaten:
AT BE CH DE ES FR GB GR IT LI LU NL SE

(71) Anmelder: **Siemens Aktiengesellschaft**
**Wittelsbacherplatz 2**
**D-8000 München 2(DE)**

(72) Erfinder: **Raiber, Thomas, Dr.**
**Gartenweg 15**
**D-7900 Ulm 10(DE)**

(54) **Elektrischer Schichtkondensator und Verfahren zu seiner Herstellung.**

(57) Der elektrische Schichtkondensator aus einem Stapel (1) von mit Belegungen (3, 4) versehenen Dielektrikumslagen (5, 6) und Decklagen (22), der an voneinander getrennten Oberflächenteilen (7, 8) mit Metallschichten (11, 12) versehen ist, an denen Stromzuführungselemente (15, 16) befestigt sind, wobei mit isolierendem Kunststoff versehene Säge-flächen (19) vorhanden sind, besitzt gemäß der Erfindung Dielektrikumslagen (5, 6) aus Polyphenylensulfid-(PPS)-Folie und ist an den Säge-flächen (19) mit einer Versiegelungsschicht aus aus-gehärtetem Hochtemperaturepoxidharz versehen.

# FIG 1

## Elektrischer Schichtkondensator und Verfahren zu seiner Herstellung

Die Erfindung betrifft einen elektrischen Schichtkondensator mit den Merkmalen:

a) ein verfestigter, von einem Mutterkondensator durch Sägen abgetrennter Stapel besteht aus mit je einer regenerierfähig dünnen Metallschicht als Belegungen versehenen, aneinander geschichteten Dielektrikumslagen aus Kunststoffolien,

b) die Oberseite und die Unterseite des Stapels sind mit wenigstens je einer Decklage versehen,

c) die Belegungen reichen von Lage zu Lage abwechselnd bis zu voneinander getrennten Oberflächenteilen des Stapels,

d) Belegungen gleicher Polarität sind durch auf die Oberflächenteile aufgespritzte Metallschichten miteinander elektrisch leitend verbunden,

e) an den Metallschichten sind Stromzuführungselemente befestigt,

f) die Sägeflächen sind mit isolierendem Kunststoff versiegelt.

Die Erfindung betrifft ferner ein Verfahren zur Herstellung eines solchen elektrischen Schichtkondensators, bei dem aus den mit regenerierfähig dünnen Metallschichten versehenen Kunststofffolien auf einem Rad oder einer Trommel mit großem Durchmesser ein Mutterkondensator erzeugt wird, dessen voneinander getrennte Oberflächenteile mit Metallschichten durch das Schoop-Verfahren versehen werden, wonach der Mutterkondensator durch Sägen in einzelne Schichtkondensatoren aufgeteilt wird.

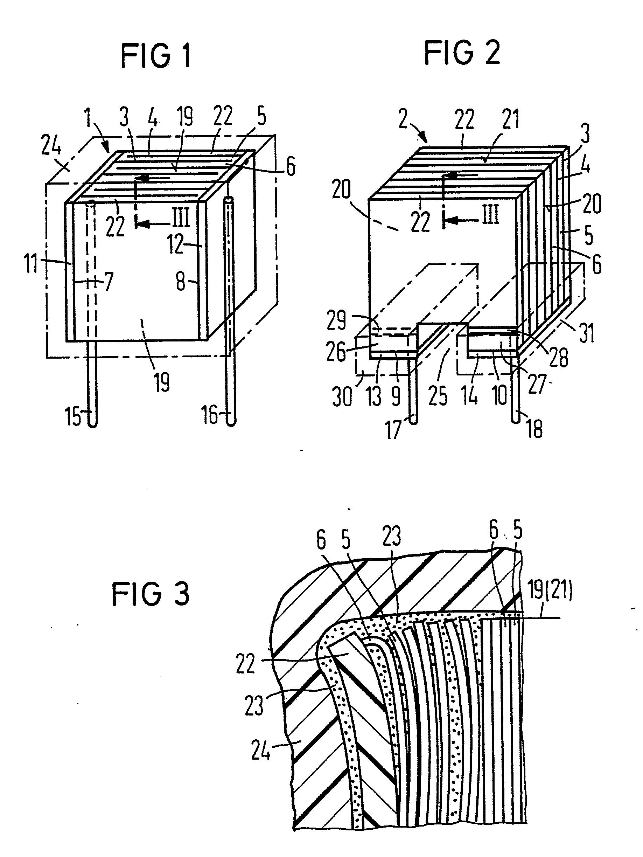

Die beiliegenden und später noch erläuterten FIG 1 und 2 zeigen derartige Schichtkondensatoren. Sowohl der Schichtkondensator gemäß FIG 1 als auch der Schichtkondensator gemäß FIG 2 und die Herstellung solcher Kondensatoren sind in der EP-B 0 144 857 (entsprechend US-PS 4 563 724) ins einzelne gehend unter Hinweis auf die dortige FIG 5 bzw. die FIG 4 beschrieben. Es wird deshalb ausdrücklich auf diese Patentschriften Bezug genommen.

Nachdem in diesen beiden Patentschriften auch auf die DE-PS 25 26 130 (entsprechend US-PS 4 041 587) hingewiesen ist, ist auch das Merkmal f), wonach die Sägeflächen mit isolierendem Kunststoff versiegelt sind, bei den Schichtkondensatoren dieser Art bekannt.

Das Versiegeln der Sägeflächen hat den Zweck, einwandfrei isolierte Schnittflächen zu erzielen und eine unzulässige Gratbildung an den Schnittkanten zu vermeiden. Die versiegelten Schnittflächen erscheinen unter einem Mikroskop frei von Rissen oder durchgehenden Löchern.

Dies wird gemäß der DE-PS 25 26 130 dadurch erreicht, daß auf den zu zertrennenden Mutterkondensator eine durch die Wärmeentwicklung beim Sägen schmelzende Polyolefinfolie angeordnet wird, daß diese zusammen mit dem Mutterkondensator zersägt wird und daß das Sägeblatt im Bereich seines Eingriffs zunächst die Polyolefinfolie und erst dann den kapazitiv wirksamen Bereich des Kondensators durchtrennt. Es wird somit ein thermoplastisches Material verwendet, das bei Erwärmung weich und beim Abkühlen steif wird, das jedoch nicht ausgehärtet wird. Auf diese Weise wird erreicht, daß die Spannungsfestigkeit annähernd verdoppelt wird.

In der DE-PS 24 46 392 (entsprechend US-PS 4 007 520) ist ein Verfahren beschrieben, bei dem die Spannungsfestigkeit an den Sägeflächen derartiger Kondensatoren dadurch erhöht wird, daß das Sägeblatt vor dem oder während des Sägevorganges mit einem isolierenden Gleitmittel beschichtet wird. Dieses Gleitmittel sorgt gewissermaßen dafür, daß die Sägefläche des Kondensators während des Sägens imprägniert wird, wodurch die Erhöhung der Spannungsfestigkeit ermöglicht wird.

Die Schichtkondensatoren der hier in Rede stehenden Art können beispielsweise in einem Becher eingebaut sein, wobei der Zwischenraum zwischen der Becherwand und dem Schichtkondensator durch ausgehärtetes Gießharz ausgefüllt ist (vgl. EP-B 0 062 167; entsprechend US-PSen 4 443 656 und 4 448 265).

Andererseits ist es möglich, einen Schichtkondensator der in FIG 1 gezeigten Art als Chip-Bauelement auszubilden, d.h. für die Montage auf der Oberfläche einer Schichtschaltung zu gestalten (SMD = Surface Mounted Device) (vgl. EP-A 0 162 149; entsprechend US-PS 4 617 609).

Auch Schichtkondensatoren der in der beiliegenden FIG 2 gezeigten Weise können als Chip-Bauelement ausgestaltet werden, wofür neben der bereits genannten EP-B 0 144 857 auch auf die nicht vorveröffentlichte EP-A (amtliches Aktenzeichen 88 106 782.1; unser Zeichen: VPA 87 P 1272) hingewiesen wird.

In der EP-A 0 169 403 ist u.a. auch ein Schichtkondensator beschrieben, der vollständig oder teilweise von einer aus zwei Schichten bestehenden festen, feuchtedichten, wärmebeständigen, chemikalienresistenten und isolierenden Umhüllung aus ausgehärtetem Kunststoff, insbesondere Epoxidharz, umgeben ist, wobei zwischen der relativ dünnen ersten Schicht und der zweiten Schicht eine durch gemeinsame Aushärtung der Kunststoffe beider Schichten gebildete Übergangszone vorhanden ist. Diese aus zwei Schichten bestehende Umhüllung wird erst aufgebracht, nachdem der Schichtkondensator mit Stromzuführungselementen versehen ist, wobei dann praktisch auch schon die zum Zwecke des Ausheilens vorhandener Fehlstellen erforderliche Spannungsbelastung und andere Meßvorgänge vorgenommen worden sind.

In dieser EP-A sind aber auch bei der Schilderung des dort relevanten Standes der Technik Literaturstellen angegeben, aus denen es bekannt ist, derartige Schichtkondensatoren partiell oder vollständig mit Isolierstoff zu umsintern. Bei der partiellen Umsinterung werden die der Kontaktierung dienenden Me tallschichten, die Stromzuführungselemente im Bereich ihrer Befestigung an diesen Metallschichten und die an die Metallschichten angrenzenden Teile der Oberfläche des den Kondensator bildenden Stapels umhüllt, während der Mittelteil dieses Stapels im Gegensatz zur vollständigen Umsinterung frei von Umhüllungsmaterial bleibt.

In der DE-PS 25 34 232 sind in Epoxidharz eingebettete oder damit umhüllte regenerierfähige Kondensatoren mit Kunststofffolien als Dielektrikum und auf diesen aufgebrachten Metallschichten der Beläge beschrieben, bei denen jeweils zwischen der Oberfläche des Kondensatorkörpers und dem diesen umgebenden Gießharz eine Zwischenschicht vorgesehen ist, die aus ausgehärteten Polyurethanlacken besteht.

In dieser Patentschrift wird von der Annahme ausgegangen, daß bei Epoxidharz, das in die Randbereiche des metallisierten Kondensatorwickels eindringt, innerhalb der zwangsläufig sehr dünnen Schichten eine vollständige Polymerisation des Gießharzes verhindert wird und daß deshalb nicht polymerisierte Bestandteile übrigbleiben, die die schlechten Isolationswerte des vorher flüssigen Harzes beibehalten. Während Epoxidharz in der vergußfertigen Mischung mit Härter nur einen Isolationswiderstand von 7,5 MOhm/cm aufweist, weist das ausgehärtete Gießharz Isolationswiderstände von $10^2$ bis $10^3$ MOhm/cm auf. Diese Isolationswiderstände liegen in der Größenordnung der spezifischen Isolationswiderstände der dielektrischen Kunststofffolien.

Offensichtlich befaßt sich diese Patentschrift ausschließlich mit Wickelkondensatoren, deren Stirnflächen mit Schoop-Metallschichten versehen sind. Abgesehen von den außen liegenden Enden der verwickelten Folien weisen diese Kondensatoren keine freien Schnittflächen auf.

Mit dem Problem, das bei mit Decklagen versehenen Schichtkondensatoren auftritt und wonach diese Decklagen aufblättern, was beispielsweise bereits beim Sägen, aber auch später beim Betrieb der Schichtkondensatoren vor allem nach Temperaturwechseln auftreten kann, befaßt sich die DE-PS 19 02 088. Zur Lösung wird in dieser Patentschrift vorgeschlagen, daß nach dem Aufteilen des Mutterkondensators in die einzelnen Schichtkondensatoren die als Decklagen wirkenden Schichten jeder Zwischenlage durch Anwendung von Druck und/oder Wärme zumindest an dem äußeren Bereich der Zwischenlagen miteinander verschweißt werden. Dieser Vorgang hat sich jedoch als aufwendig erwiesen.

In der DE-AS 1 072 663 ist allgemein für elektrische Bauteile, beispielsweise Wicklungen, eine Mehrschichtisolation auf Gießharzbasis vorgeschlagen, die aus einer dünnen Epoxidharzschicht, die sich infolge der mit einem bei der Vergußtemperatur niedrigviskosem Epoxidharz vorgenommenen Imprägnierung auf den elektrischen Bauteilen gebildet hat, und einer darauf aufgebrachten Gießharzumhüllung ausgefüllten Expoxidharz besteht, wobei auf die Gießharzumhüllung eine kriechstromfeste dünne Schicht auf Gießharzbasis aufgebracht ist. Schichtkondensatoren im Sinne der vorliegenden Erfindung bedürfen jedoch im Prinzip keiner Imprägnierung.

Neuerdings werden auf dem Markt Kunststoffolien aus Polyphenylensulfid (PPS) für die Herstellung elektrischer Kondensatoren angeboten. Diese PPS-Folien können mit regenerierfähig dünnen Metallbelegungen beschichtet werden und eignen sich für die Herstellung von Schichtkondensatoren nach dem sogenannten und weitgehend bekannten Trommelwickelverfahren (vgl. z.B. EP-B 0 144 857). Wegen der sehr guten dielektrischen, thermischen und mechanischen Eigenschaften dieser PPS-Folien wäre es wünschenswert, daraus Schichtkondensatoren der oben beschriebenen Art mit allen oben ebenfalls erläuterten Variationen (Bechereinbau, partielle oder vollständige Umhüllung, Ausführung als Chip-Bauelement mit oder ohne Umhüllung) herzustellen. Dabei treten jedoch Schwierigkeiten auf.

Schichtkondensatoren mit PPS-Folien als Dielektrikum haben nach der Fertigstellung (Sägen, Tempern, Aufschließen, d.h. Beseiti gung vorhandener Fehlstellen) nur eine sehr geringe Spannungsfestigkeit. Nicht selbstheilende Durchschläge an den Sägeflächen solcher Schichtkondensatoren führen bei einer Dielektrikumsdicke von 2,5 $\mu$m schon ab etwa 40 V/$\mu$m zu einem Totalausfall der Kondensatoren.

Bei der Tauchlötung, bei der die Kondensatoren für eine Zeit von etwa 5 bis 10 Sekunden einer Temperatur von etwa 260° C ausgesetzt werden, lösen sich durch den Wärmeeinfluß des Lötbades mehrere Lagen, insbesondere Decklagen vom Kondensator ab, wenn dieser keine äußere Isolierumhüllung (eingebaut im vergossenen Becher, teilweise oder vollständig umsintert) aufweist.

Versieht man Schichtkondensatoren aus PPS-Folien mit einer Umhüllung, so entstehen bei Betriebsaufnahme Kurzschlüsse, die sich nicht mehr beheben lassen. Die Untersuchung solcher Schichtkondensatoren zeigt, daß insbesondere an den Ecken der Sägekanten meist einige Folienlagen durch mechanischen Einfluß beim Umhüllen umgeklappt wurden. Ferner dringt oft das Umhüllungsmaterial in die Öffnungen der Sägefläche, insbesondere im Bereich der Sägekanten, des Schichtkondensators ein und vermindert auch dadurch die Spannungsfestigkeit.

Die Anwendung der für die Versiegelung der Schnittflächen aus den bereits genannten DE-PSen 24 46 392 und 25 26 130 bekannten Verfahren führt, wie Versuche gezeigt haben, nur zu einer unbedeutenden Verbesserung der Spannungsfestigkeit und der mechanischen Festigkeit von Schichtkondensatoren aus PPS-Folien.

Der Erfindung liegt die Aufgabe zugrunde, einen Schichtkondensator aus PPS-Folie anzugeben, der sowohl bezüglich der mechanischen Eigenschaften und der Feuchtesicherheit den durch Normung oder durch Kundenwünsche gestellten Anforderungen genügt, als auch im Hinblick auf die Spannungsfestigkeit eine wesentliche Verbesserung zeigt; es ist ferner Aufgabe der Erfindung, ein Verfahren zur Herstellung solcher Schichtkondensatoren anzugeben.

Zur Lösung dieser Aufgabe ist der elektrische Schichtkondensa tor der eingangs angegebenen Art erfindungsgemäß gekennzeichnet durch die weiteren Merkmale:

g) die Dielektrikumslagen bestehen aus Polyphenylsulfid-(PPS)-Folien,

h) wenigstens die Sägeflächen sind mit einer Schicht aus ausgehärtetem Epoxidharz versiegelt, das auch bei hohen Temperaturen, nämlich bei etwa 260°C, sich nicht verändert (Hochtemperaturepoxidharz).

Ein Hochtemperaturepoxidharz, das diese Forderung erfüllt, wird von der Fa. Contronics als Typ 460 mit einer Gebrauchstemperatur von 260°C auf den Markt gebracht.

Vorzugsweise weist der elektrische Schichtkondensator zusätzlich zur Versiegelungsschicht eine Schutzumhüllung aus Isoliermaterial auf, die wenigstens die Metallschichten, die daran befestigten Stromzuführungselemente wenigstens im Bereich ihrer Befestigung und wenigstens teilweise die an den Metallschichten angrenzenden Oberflächenteile des Stapels bedeckt.

Andererseits ist es vorteilhaft, wenn der elektrische Schichtkondensator zusätzlich zur Versiegelungsschicht in einem Gehäuse aus Isolierstoff untergebracht ist und der zwischen dem Gehäuse und dem Kondensator befindliche Hohlraum mit ausgehärtetem Gießharz ausgefüllt ist.

Die Stromzuführungselemente des elektrischen Schichtkondensators können in Form von Drähten oder Bändern ausgebildet sein.

Andererseits ist es aber auch vorteilhaft, wenn der elektrische Schichtkondensator als Chip-Bauelement zur Oberflächenmontage auf Schichtschaltungen (SMD = Surface Mounted Device) ausgebildet ist.

Das eingangs angegebene Verfahren zur Herstellung eines solchen Kondensators ist zur Lösung der Aufgabe erfindungsgemäß dadurch gekennzeichnet, daß unmittelbar nach dem Absägen der einzelnen Schichtkondensatoren diese in flüssiges, niederviskoses Hochtemperaturepoxidharz, das sich im ausgehärteten Zustand bei hohen Temperaturen, nämlich bei etwa 260°C, nicht verändert, eingetaucht werden, anschließend etwa 4 Stunden bei etwa 100°C und anschließend etwa 10 Stunden bei etwa 180°C getempert wird, wonach die Schichtkondensatoren für ihre spätere Verwendung mit Stromzuführungselementen versehen, durch Anlegen einer höheren Spannung Fehlstellen beseitigt und die einzelnen elektrischen Werte geprüft werden.

Durch die Erfindung wird erreicht, daß die Spannungsfestigkeit der Schichtkondensatoren auf ca. 160 V/μm erhöht ist. Selten auftretende Durchschläge an den Sägekanten sind selbstheilend, so daß kein Kurzschluß auftritt.

Da das Epoxidharz im niedrigviskosem Zustand außerdem in sämtliche Spalten des Kondensators eindringt, resultiert nach dem Aushärten des Epoxidharzes eine verbesserte mechanische Verfestigung, so daß die Weiterverarbeitung der einzelnen Schichtkondensatoren wesentlich vereinfacht wird.

Bei Tauchlötversuchen (260°C für 5 Sekunden) und im Schwallötbad zeigen Schichtkondensatoren mit PPS-Folie, die keine weitere Isolierumhüllung aufweisen, deren Sägeflächen jedoch versiegelt sind, keine mechanischen Schäden, etwa in der Form, daß Deckfolienteile abgelöst sind oder Spalten und Risse in der Sägefläche auftreten.

Die Änderung der Kapazität vor und nach der Lötung (Tauchlötung oder Lötung im Schwallötbad) liegt unter 0,5 %.

Isolationsausfälle treten nicht auf.

Schichtkondensatoren mit PPS-Folie in Chip-Bauweise haben nach dem Umhüllen, z.B. Umspritzen bzw. Umsintern, praktisch zu 100 % eine hohe Isolation (größer 1 x 10³ MOhm bei 10 V Meßspannung). Untersuchungen solcher Schichtkondensatoren unter dem Mikroskop zeigen, daß durch das Epoxidharz die einzelnen Lagen der 2,5 μm dicken PPS-Folien dauerhaft fixiert sind. Ein Ablösen oder sogar ein Umklappen der Deckfolien oder auch ein Umklappen der PPS-Folien wird nicht mehr beobachtet. Die Sägefläche wird darüberhinaus durch die Versiegelungsschicht vor dem Eindringen von Material der weiteren Isolierumhüllung geschützt.

Da die Versiegelungsschicht auch die der Kontaktierung der Belegungen dienenden Metallschichten bedeckt, kann es erforderlich sein, die Versiegelungsschicht an den Stellen der Metallschichten zu entfernen, an denen Stromzuführungselemente befestigt werden müssen. Die Entfernung kann entweder im Rahmen des Schweißprozesses bei der Befestigung erfolgen oder sie wird durch mechanische oder chemische Behandlung durchgeführt.

Die Erfindung wird nachfolgend anhand der beigefügten Figuren erläutert.

Es zeigen:

FIG 1 einen Schichtkondensator mit an gegenüberliegenden Oberflächenteilen befindlichen Metallschichten;

FIG 2 einen Schichtkondensator mit Metallschichten, die an durch einen Schlitz getrennten Oberflächenteilen angeordnet sind;

FIG 3 einen vergrößerten Ausschnitt der FIG 1 und 2 gemäß III.

Der elektrische Schichtkondensator gemäß FIG 1 besteht aus einem verfestigten Stapel 1, aus mit je einer regenerierfähig dünnen Metallschicht als Belegungen 3, 4 versehenen, aneinandergeschichteten Dielektrikumslagen 5, 6 aus Kunststoffolien. Die Belegungen 3 und 4 reichen von Lage zu Lage abwechselnd bis zu den einander gegenüberliegenden Oberflächenteilen 7 und 8 des Stapels 1. Auf diesen Oberflächenteilen 7 und 8 befinden sich Metallschichten 11 und 12. Die Metallschicht 11 verbindet dabei die Belegungen 3 miteinander, während die Metallschicht 12 die Belegungen 4 miteinander verbindet. An den Metallschichten 11 und 12 sind Stromzuführungselemente 15 und 16 in an sich bekannter Weise befestigt, beispielsweise angelötet oder angeschweißt, wobei es sich bei diesem Beispiel um drahtförmige Stromzuführungselemente handelt. Als Stromzuführungselemente sind auch Kappen oder U-förmige Metallteile möglich.

Die die Belegungen 3, 4 darstellenden, dünn auf den Lagen 5, 6 aufgetragenen Metallschichten enden in den beiden Sägeflächen 19 des Stapels 1.

Senkrecht zu den Sägeflächen 19 befinden sich auf der Oberseite und der Unterseite des Stapels 1 je eine Decklage 22, die im vorliegenden Fall parallel zur Zeichenebene verlaufen.

In FIG 1 ist der gesamte Schichtkondensator mit einer gestrichelt dargestellten Umhüllung 24 versehen, die im vorliegenden Beispiel durch Wirbelsintern in an sich bekannter Weise aufgebracht sein kann. Aus dieser Umhüllung ragen die Stromzuführungselemente 15 und 16 heraus.

Zwischen wenigstens den beiden Sägeflächen 19 und der Umhüllung 24 befindet sich die aus Gründen der Übersichtlichkeit in FIG 1 weggelassene Versiegelungsschicht 23, die später bei FIG 3 erläutert wird.

Der in FIG 2 dargestellte Schichtkondensator unterscheidet sich vom Schichtkondensator gemäß FIG 1 dadurch, daß an einer Seitenfläche ein Einschnitt 25 vorhanden ist, der die Oberfläche dieser Seitenfläche in zwei Vorsprünge 26 und 27 aufteilt. Die Stirnflächen dieser Vorsprünge 26 und 27 bilden durch den Einschnitt 25 die beiden voneinander getrennten Oberflächenteile 9 und 10. Auf diesen Oberflächenteilen 9 und 10 befinden sich die zur Kontaktierung einerseits der Belegungen 3 und andererseits der Belegungen 4 dienenden Metallschichten 13 und 14. Der Stapel 2, der das Grundelement dieses Schichtkondensators darstellt, besteht - wie auch bei FIG 1 - aus den Dielektrikumslagen 5 und 6, die mit als Belegungen 3 und 4 dienenden, regenerierfähig dünn aufgetragenen Metallschichten versehen sind.

Oberseite und Unterseite des Stapels 2, die bei der gewählten Darstellung Vorder- und Hinterseite sind, sind mit wenigstens je einer Decklage 22 versehen. Die an die vordere Decklage 22 anschließende Dielektrikumslage 5 trägt die Belegung 3. Diese Belegung reicht auf dem Vorsprung 26 bis zum Oberflächenteil 9 und ist dort an die Metallschicht 13 elektrisch angeschlossen, während die Belegung 3 auf dem Vorsprung 27 durch den Isolierstreifen 28 unterbrochen ist und somit von der Metallschicht 14 isoliert ist.

Die auf die Dielektrikumslage 6 aufgetragene Metallschicht 4 reicht auf dem Vorsprung 27 bis zum Oberflächenteil 10 und ist dort elektrisch mit der Metallschicht 14 verbunden, während sie auf dem Vorsprung 26 durch den Isolierstreifen 29 mit der Metallschicht 13 nicht verbunden ist. Auf diese Weise resultiert die alternierend von Dielektrikumslage zu Dielektrikumslage zu voneinander getrennten Oberflächenteilen reichende Ausführung der Belegungen 3 und 4.

An die Metallschichten 13 und 14 können, wie in der EP-B 0 144 857, FIG 1 und 4 gezeigt, drahtförmige Stromzuführungselemente 17, 18 befestigt sein. Es ist aber auch möglich, die Vorsprünge 26 und 27 mit Metallkappen 30 und 31 zu umgeben, die in FIG 2 durch Strichelung angedeutet sind und die beispielsweise den Einsatz dieses Schichtkondensators als Chip-Bauelement ermöglichen.

Aus der Herstellung der Schichtkondensatoren gemäß FIG 2 resultiert, daß die Sägeflächen 20 an gegenüberliegenden Seiten liegen, in denen die Belegungen 3 und 4 enden. In manchen Fällen entsteht auch noch die Sägefläche 21, in der ebenfalls die Belegungen 3 und 4 enden. Dies ist dann der Fall, wenn beim Trommelwickelverfahren die zu verwickelnden Dielektrikumsbänder eine Breite aufweisen, die so bemessen ist, daß zwei Kondensatoren entstehen, die spiegelbildlich zueinander liegen und in der Mitte voneinander getrennt werden.

Ferner sind Sägeflächen an der Oberfläche des Einschnittes 25 vorhanden.

Alle diese Sägeflächen und die zugehörigen Decklagen sind mit einer Versiegelungsschicht 23 versehen, die in FIG 2 ebenfalls aus Gründen der Übersichtlichkeit nicht gezeigt ist, sondern - wie auch bei FIG 1 - anhand der FIG 3 erläutert wird.

FIG 3 zeigt schematisch und vergrößert den Ausschnitt III in den FIG 1 und 2.

Man erkennt die Dielektrikumslagen 5 und 6, bei denen aus Gründen der Übersichtlichkeit die für Isoliermaterial erforderliche Schraffierung weggelassen wurde. Ebenso wurden die Metallbelegungen 3 und 4 weggelassen, weil dies lediglich eine Verstärkung der Linien bedeutet hätte. Die Metallbelegungen 3 und 4 enden in der Sägefläche 19 bzw. 22.

FIG 3 soll zum Ausdruck bringen, daß die aus PPS-Folie bestehenden Dielektrikumslagen 5 und 6 insbesondere im Randbereich der Sägeflächen 19 bzw. 22 aus ihrer normalen Lage heraus verkrümmt sind und dabei auch die Decklage 22 aus der Normallage heraus verbiegen.

Die durch Punktierung angedeutete Versiegelungsschicht 23 umgibt die Decklage 22 und die Sägefläche 19 bzw. 22, und es ist zu erkennen, daß das Material der Versiegelungsschicht in die Hohlräume zwischen Decklage 22 und Dielektrikumslagen 5, 6 und zwischen den Dielektrikumslagen selbst eingedrungen ist. Durch die Aushärtung, die ausreichend durch den im Verfahren vorgesehenen Tempervorgang bewirkt wird, ist durch die Versiegelungsschicht 23 eine Verfestigung des Stapels erfolgt.

Zusätzlich zur Versiegelungsschicht 23 kann weiteres Isoliermaterial vorhanden sein, das dann die Umhüllung 24 bildet. Diese Umhüllung 24 kann ausgehärtete Vergußmasse, z.B. Epoxidharz bei Bechereinbau, oder alleinige Umhüllmasse bei partieller oder vollständiger Umhüllung durch Umsinterung oder ähnliches sein.

Kunststoffmaterialien hierfür sind hinreichend bekannt.

Bezugszeichenliste

1 verfestigter Stapel mit einander gegenüberliegenden Metallschichten 11, 12

2 verfestigter Stapel mit auf Vorsprüngen befindlichen Metallschichten 13, 14

3 Belegung

4 Belegung

5 Dielektrikumslage

6 Dielektrikumslage

7 Oberflächenteil am Stapel 1

8 Oberflächenteil am Stapel 1

9 Oberflächenteil am Stapel 2

10 Oberflächenteil am Stapel 2

11 Metallschicht auf dem Oberflächenteil 7

12 Metallschicht auf dem Oberflächenteil 8

13 Metallschicht auf dem Oberflächenteil 9

14 Metallschicht auf dem Oberflächenteil 10

15 Stromzuführungselement

16 Stromzuführungselement

17 Stromzuführungselement

18 Stromzuführungselement

19 Sägeflächen am Stapel 1

20 Sägeflächen am Stapel 2

21 obere Sägefläche am Stapel 2

22 Decklagen

23 Versiegelungsschicht

24 Umhüllung

25 Einschnitt

26 Vorsprung

27 Vorsprung

28 Isolierstreifen

29 Isolierstreifen

30 Metallkappe

31 Metallkappe

## Ansprüche

1. Elektrischer Schichtkondensator mit den Merkmalen:

a) ein verfestigter, von einem Mutterkondensator durch Sägen abgetrennter Stapel (1, 2) besteht aus mit je einer regenerierfähig dünnen Metallschicht als Belegungen (3, 4) versehenen, aneinander geschichteten Dielektrikumslagen (5, 6) aus Kunststoffolien,

b) die Oberseite und die Unterseite des Stapels (1, 2) sind mit wenigstens je einer Decklage (22) versehen,

c) die Belegungen (3, 4) reichen von Lage zu Lage abwechselnd bis zu voneinander getrennten Oberflächenteilen (7, 8, 9, 10) des Stapels (1, 2),

d) Belegungen (3 oder 4) gleicher Polarität sind durch auf die Oberflächenteile (7, 8, 9, 10) aufgespritzte Metallschichten (11, 12, 13, 14) miteinander elektrisch leitend verbunden,

e) an den Metallschichten (11, 12, 13, 14) sind Stromzuführungselemente (15, 16, 17, 18) befestigt,

f) die Sägeflächen (19, 20, 21) sind mit isolierendem Kunststoff versiegelt,

**gekennzeichnet** durch die weiteren Merkmale:

g) die Dielektrikumslagen (5, 6) bestehen aus Polyphenylensulfid-(PPS)-Folien,

h) wenigstens die Sägeflächen (19, 20, 21) sind mit einer Schicht (23) aus ausgehärtetem Epoxidharz versiegelt, das auch bei hohen Temperaturen, nämlich bei etwa 260° C, sich nicht verändert (Hochtemperaturepoxidharz).

2. Elektrischer Schichtkondensator nach Anspruch 1, **dadurch gekennzeichnet,** daß zusätzlich zur Versiegelungsschicht (23) eine Schutzumhüllung (24) aus Isoliermaterial vorhanden ist, die wenigstens die Metallschichten (11, 12, 13, 14), die daran befestigten Stromzuführungselemente (15, 16, 17, 18) wenigstens im Bereich ihrer Befestigung und wenigstens teilweise die an den Metallschichten angrenzenden Oberflächenteile des Stapels (1, 2) bedeckt.

3. Elektrischer Schichtkondensator nach Anspruch 1, **dadurch gekennzeichnet,** daß er zusätzlich zur Versiegelungsschicht (23) in einem Gehäuse aus Isolierstoff untergebracht ist und der zwischen dem Gehäuse und dem Kondensator befindliche Hohlraum mit ausgehärtetem Gießharz ausgefüllt ist.

4. Elektrischer Schichtkondensator nach Anspruch 1, **dadurch gekennzeichnet,** daß die Stromzuführungselemente (15, 16, 17, 18) in Form von Drähten oder Bändern ausgebildet sind.

5. Elektrischer Schichtkondensator nach Anspruch 1, **dadurch gekennzeichnet,** daß er als Chip-Bauelement zur Oberflächenmontage auf Schichtschaltungen (SMD = Surface Mounted Device) ausgebildet ist.

6. Verfahren zur Herstellung eines elektrischen Schichtkondensators nach Anspruch 1, bei dem aus den mit regenerierfähig dünnen Metallschichten versehenen Kunststoffolien auf einem Rad oder einer Trommel mit großem Durchmesser ein Mutterkondensator erzeugt wird, dessen voneinander getrennte Oberflächenteile mit Metallschichten durch das Schoop-Verfahren versehen werden, wonach der Mutterkondensator durch Sägen in einzelne Schichtkondensatoren aufgeteilt wird, **dadurch gekennzeichnet,** daß unmittelbar nach dem Absägen der einzelnen Schichtkondensatoren diese in flüssiges, niederviskoses Hochtemperaturepoxidharz, das sich im ausgehärteten Zustand bei hohen Temperaturen, nämlich bei etwa 260°C, nicht verändert, eingetaucht werden, anschließend etwa vier Stunden bei etwa 100°C und anschließend etwa 10 Stunden bei etwa 180°C getempert wird, wonach die Schichtkondensatoren für ihre spätere Verwendung mit Stromzuführungselementen versehen, durch Anlegen einer höheren Spannung Fehlstellen beseitigt und die einzelnen elektrischen Werte geprüft werden.

FIG 1

FIG 2

FIG 3

Europäisches
Patentamt

**EUROPÄISCHER RECHERCHENBERICHT**

Nummer der Anmeldung

EP 88 11 3460

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-4 672 506 (TORAY INDUSTRIES INC.) * Spalte 2, Zeilen 29-60; Spalte 5, Zeilen 5-45; Spalte 8, Zeilen 14-23; Spalte 12, Zeile 50 - Spalte 14, Zeile 11; Figuren * --- | 1,5 | H 01 G 4/30 H 01 G 1/10 |
| A | EP-A-0 130 386 (W. WESTERMANN) * Seite 3, Zeilen 15-35; Seite 4, Zeilen 10-28; Figur 1 * --- | 1,4,5 | |
| A,D | FR-A-2 314 572 (SIEMENS AG) * Ansprüche 1,7 * --- | 1 | |
| A | DE-A-2 424 368 (SIEMENS AG) ----- | | |

RECHERCHIERTE
SACHGEBIETE (Int. Cl.4)

H 01 G

Der vorliegende Recherchenbericht wurde für alle Patentansprüche erstellt

| Recherchenort | Abschlußdatum der Recherche | Prüfer |
|---|---|---|
| DEN HAAG | 04-04-1989 | SCHUERMANS N.F.G. |